# EUROPEAN PATENT APPLICATION

(11) **EP 4 683 185 A1**
(43) Date of publication of application: **21.01.2026**
(21) Application number: 23958938.5
(22) Date of filing: 13.11.2023
(51) Int. Cl.: H02K 9/06, H02K 9/14, H02K 7/08, H02K 7/14, H02K 5/24

(54) **FAN MOTOR**

(71) Applicant: LG Electronics Inc., Yeongdeungpo-gu Seoul 07336 (KR)
(72) Inventor: HWANG, Eunji, Seoul 08592 (KR); KIM, Byungjik, Seoul 08592 (KR); KIM, Sunggi, Seoul 08592 (KR); HWANG, Jisu, Seoul 08592 (KR)
(74) Representative: Vossius & Partner Patentanwälte Rechtsanwälte mbB
(86) International application number: PCT/KR2023/018157
(87) International publication number: WO 2025/105511

(57) **Abstract**

A fan motor is disclosed. This fan motor is a reverse fan motor in which an impeller is arranged at a downstream side of the motor with respect to an air flow direction. Accordingly, the cooling performance of the motor is improved. The fan motor includes a spring that applies a preload to a bearing. Accordingly, it is possible to extend the lifespan of the bearing by removing the gap between the balls and the raceway of the bearing. One of the two bearings is close to the impeller. The bearing close to the impeller is a load bearing. The fan motor includes a stopper arranged inside the motor housing to surround one surface of the load bearing. Accordingly, the stopper can limit the movement of the load bearing in the thrust direction when the load bearing receives thrust during operation.

## Description

### Technical field

The disclosure relates to a fan motor that generates airflow using an electric motor as a power source.

### Background Art

Motors may be installed in home appliances, such as vacuum cleaners, hair dryers, and the like.

A vacuum cleaner or a hair dryer may generate rotational force by using a motor as a power source.

Generally, vacuum cleaners remove dust and other debris through suction force of a fan motor. To improve cleaning performance, such as dust removal, and increase capacity, it is necessary to increase the suction force of the fan motor.

To increase the suction force of the fan motor, it is necessary to maintain rotational speed of a fan at high speed, for example, 10,000 rpm to 140,000 rpm.

However, in case that the fan rotates at the rotational speed, it may have a negative effect on the lifespan of a bearing.

For example, a ball bearing includes balls and a raceway which encloses the balls. The raceway includes an inner ring located at a radially inner side of the balls, and an outer ring located at a radially outer side of the balls.

The balls roll at high speed between the inner and outer rings. In case that a gap is generated between the balls and the raceway during operation of the fan motor, the gap causes vibration and noise, which reduces the lifespan and durability of the bearing.

To improve the problem, upon assembling the bearing into a housing of the fan motor, the gap between the balls and the raceway may be eliminated by applying preload to the outer ring of the raceway of the bearing. The outer ring of the bearing may be fixed to the housing of the fan motor by an adhesive or the like.

However, even in the case that the preload is applied to the bearing, thrust is applied to rotating elements, such as an impeller, a rotational shaft, and two bearings, during a high-speed operation, which causes the following problems.

Preload may be applied to a second bearing, which is located further away from the impeller, of two bearings.

In case that thrust is applied to a first bearing, which is located close to the impeller, of the two bearings, during the operation of the fan motor, the balls and raceway of the first bearing receive a load by thrust, which acts in the same direction as an acting direction of the preload, while being in contact with each other.

The outer ring of the first bearing must be restricted from moving in the direction in which the thrust acts.

However, the first bearing is overloaded during operation, thereby shortening the lifespan of the bearing.

In another example, in case that thrust is applied to the second bearing of the two bearings, a gap between the balls and the raceway of the second bearing increases due to the thrust.

This causes an abnormal behavior of the second bearing, such as vibration and slipping, due to the increased gap between the balls and the raceway.

For example, in case that a load bearing receiving the thrust is located far from the impeller, the impeller generates a moment on the load bearing during rotation at high speed. This may cause severe vibration between the rotational shaft and the bearing, which may further shorten the lifespan of the bearing.

Fan motors may be classified into forward fan motors and reverse fan motors depending on the relative positions of an impeller and a motor.

The forward fan motor is a fan motor in which the impeller is located upstream of the motor in an airflow direction.

The reverse fan motor is a fan motor in which the impeller is located downstream of the motor in the airflow direction.

However, for forward fan motors, there is a problem in that the cooling performance of a motor is reduced because air temperature rises as the air passes through an impeller.

For reverse fan motors, air passes sequentially through a motor and an impeller. As a result, the cooling performance of the motor is superior to that of the forward fan motor. Therefore, research and development on reverse fan motors are necessary.

For reverse fan motors, the structural design must be adapted to a method of applying preloads to bearings.

Prior art patent document 1, US5904471A (published on May 18, 1999, hereinafter, referred to as Patent Document 1), relating to a bearing preloading structure of a reverse fan, discloses a cooling element for an electric centrifugal air compressor.

In Patent Document 1, a spring applies preload to an outer ring of one of two bearings. Accordingly, the outer rings of the two bearings are located inside the inner rings of the two bearings in a direction in which the outer rings are brought closer to each other along an axial direction. This type of bearing preloading method may be referred to as an inward preloading method.

However, in Patent Document 1, an axial distance between the center of gravity of the impeller and the outer ring is longer than an axial distance between the center of gravity of the impeller and the inner ring.

Due to this, Patent Document 1 has a problem in that stable support of the bearing is difficult and the lifespan of the bearing is shortened due to an increase in moment generated by the impeller depending on the relative positions between the impeller and the bearing.

In case that thrust is applied to the bearing during operation, there is a problem in that a gap between the balls and the raceway of the bearing widens, causing vibration and noise of the bearing.

Prior Art Patent Document 2, CN112268009A (published on January 26, 2021, hereinafter, referred to as Patent Document 2), relating to a bearing preloading structure of a reverse fan, discloses a fan and an electric cleaning product.

However, in Patent Document 2, an increased distance between a load bearing, which receives both preload and thrust, may cause severe vibrations in the rotational shaft during high-speed rotation. This may further shorten the lifespan of the bearing.

Prior art patent document 3, JP 2020-032254 A (published on March, 5, 2020, hereinafter, referred to as Patent document 3), relating to a bearing preloading structure, discloses a blower having a bearing pipe.

Patent Document 3 includes a forward fan located upstream of a motor in an airflow direction and a reverse fan located downstream of the motor. A load bearing is arranged adjacent to the forward fan. A semi-load bearing which receives preload is arranged adjacent to the reverse fan.

According to Patent Document 3, external air cools the motor after passing through the forward fan. The air which has passed through the motor passes through the reverse fan and is then discharged to the outside.

However, Patent Document 3 has a problem in that the cooling performance of the motor is lowered compared to the reverse fan motor because air temperature rises while passing through the forward fan.

In Patent Document 3, a spring applies preload to the inner ring of the semi-load bearing.

However, in Patent Document 3, a washer is arranged between the spring and the inner ring. When the washer is in contact with the inner ring, as a rotating element, to transmit the preload, friction between the washer and the inner ring causes the inner ring to wear out, which results in fatal damage to the bearing.

There is a problem in that the rotation of the inner ring applies torsional moment to the spring, which causes fatal damage to the spring.

In particular, a problem with Patent Document 3 is that the preload of the spring creates rotational resistance on the inner ring, making it unsuitable for the fan motor which must rotate at high speed (100,000 rpm to 140,000 rpm).

### Disclosure of Invention

### Technical Problem

The disclosure is directed to providing a fan motor having a structure that is capable of solving those problems and other drawbacks.

A first aspect is to provide a fan motor with a structure that is capable of improving the cooling performance of the motor.

A second aspect is to provide a fan motor with a structure that is capable of extending the lifespan and improving the durability of the bearing.

A third aspect is to provide a fan motor with a structure that is capable of stably supporting a bearing against a moment of a fan.

A fourth aspect is to provide a fan motor with a structure that is capable of restricting a bearing from moving in a thrust direction during high-speed operation.

A fifth aspect is to provide a fan motor with a structure that is capable of maintaining a constant amplitude of preload according to a temperature difference between a rotational shaft and a housing during operation and the wear of a bearing.

### Solution to Problem

As a result of an intensive research, the inventors of the disclosure can achieve solution to the problems and the aforementioned first to fifth aspects by the following embodiments of the disclosure.

To achieve the first aspect according to an embodiment, a fan motor includes a rotational shaft, an impeller rotatably mounted on the rotational shaft and forming an airflow in an axial direction; and a motor arranged upstream of the impeller in direction of the airflow, and configured to drive the impeller by comprising a rotor coupled to the rotational shaft, and a stator surrounding an outer circumferential surface of the rotor.

As the motor is arranged on the upstream side of the impeller, external air can pass through the impeller after cooling the motor first, thereby improving the cooling performance of the motor.

The fan motor includes a motor housing accommodating the motor; and a plurality of bearings supporting the rotational shaft. The plurality of bearings includes a first bearing located upstream of the motor and a second bearing located downstream of the motor, based on the motor located between the first bearing and the second bearing.

To achieve the second aspect described above, the fan motor may include a spring configured to apply preload to the first bearing. With the configuration, the spring can extend the lifespan and improve the durability of the bearing.

To achieve the fourth aspect described above, the fan motor may include a stopper arranged inside the motor housing and surrounding a portion of one surface of the second bearing facing the rotor. With the configuration, the stopper can restrict the movement of the second bearing in a thrust direction opposite to the direction of the airflow.

To achieve the third aspect described above, the second bearing of the fan motor may be arranged adjacent to the impeller. With the configuration, the moment of the impeller can be minimized, which can result in stable support of the bearing.

Optionally, the second bearing may be arranged upstream or downstream of the impeller. This can allow the selection of an appropriate bearing preloading method based on the positions of the bearing and the impeller.

The plurality of bearings may each be configured as a ball bearing. The ball bearing may include: an inner ring coupled to the rotational shaft; an outer ring arranged radially outside the inner ring; and balls arranged in rolling contact between the inner ring and the outer ring.

The spring may apply the preload in the thrust direction to the outer ring of the first bearing. An axial distance between the outer ring of the first bearing and the outer ring of the second bearing may be larger than an axial distance between the inner ring of the first bearing and the inner ring of the second bearing. With the configuration, the spring can apply the preload to the bearing in an outward preloading manner.

The spring may apply the preload in the direction of the airflow to the outer ring of the first bearing. An axial distance between the outer ring of the first bearing and the outer ring of the second bearing may be smaller than an axial distance between the inner ring of the first bearing and the inner ring of the second bearing. With the configuration, the spring can apply the preload to the bearing in an inward preloading manner.

The motor and the impeller may be located between the first bearing and the second bearing. With the configuration, the sequential arrangement of the first bearing-motor-impeller-second bearing in the direction of the airflow can be made. In this arrangement structure, the inward preloading method can offer more stable support of the bearing against the moment of the impeller, compared to the outward preloading method.

The motor housing may include: a first bearing housing arranged upstream of the motor and accommodating the first bearing therein; and a second bearing housing arranged downstream of the motor, and accommodating the second bearing.

To achieve the fifth aspect described above, the fan motor may further include a holder arranged inside the first bearing housing and supporting the spring. The holder may include: a spring inner wall surrounding an inside of the spring, and coupled to an outer circumferential surface of the first bearing; a spring outer wall surrounding an outside of the spring, and arranged to face an inner circumferential surface of the first bearing housing; and a connecting portion connecting one end of the spring inner wall and one end of the spring outer wall in an opposite direction to the motor. The motor housing may further include a spring support portion arranged toward the motor, and protruding from the inner circumferential surface of the first bearing housing to support one end of the spring facing the rotor. With the configuration, the spring which is supported by being accommodated inside the holder and the spring support portion can pull the first bearing in the opposite direction to the motor and apply preload to the plurality of bearings in an outward preloading manner.

The holder may further include an O-ring mounted on an outer circumferential surface of the spring outer wall, and configured to be movably in contact with the inner circumferential surface of the first bearing housing in the thrust direction. Accordingly, the O-ring can suppress the slipping of the first bearing in a circumferential direction. The O-ring can allow the holder to move axially on the inner circumferential surface of the first bearing housing, so that the first spring can constantly apply preload in the thrust direction to the first bearing even during operation (constant force preload).

The motor housing may further include an alignment guide protruding from an inner end of the spring support portion toward the spring inner wall, and arranged to overlap the spring inner wall in the axial direction. With this configuration, the alignment guide can be axially aligned with the spring inner wall, so that the spring inner wall and the first bearing can be easily aligned.

The motor housing may include: a motor support portion extending in the axial direction while surrounding an outer circumferential surface of the motor, and supporting the motor; a first bridge radially extending from an outer circumferential surface of the first bearing housing toward an upstream end portion of the motor support portion; and a second bridge radially extending from an outer circumferential surface of the second bearing housing toward a downstream end portion of the motor support portion. Accordingly, the motor support portion can firmly support the motor.

The motor support portion may be arranged as a plurality of motor support portions, which are arranged spaced apart in a circumferential direction along the outer circumferential surface of the motor. The motor housing may further include an outer ring part extending in the circumferential direction to connect the downstream end portions of the plurality of motor support portions. The plurality of motor support portions can be connected and supported by the outer ring part.

The stopper may be arranged toward the motor, and protrude from an inner circumferential surface of the second bearing housing to secure the one surface of the second bearing. Accordingly, the second bearing can be restricted from moving in the thrust direction during high-speed operation of the impeller.

A diameter of the second bearing may be larger than or equal to a diameter of the first bearing. Accordingly, the second bearing which is a load bearing close to the impeller can better withstand thrust during operation.

The fan motor may further include a vane arranged downstream of the impeller, and configured to guide the airflow.

The fan motor may further include: an impeller housing coupled to a downstream end portion of the motor housing and accommodating the impeller; and a vane housing coupled to a downstream end portion of the impeller housing and supporting the vane.

An upstream end portion of the impeller housing may be coupled to an inner circumferential surface of the downstream end portion of the motor housing, and the downstream end portion of the impeller housing may be coupled to an inner circumferential surface of an upstream end portion of the vane housing.

The vane may be a one-stage vane or a two-stage vane.

The vane housing supporting the vane may include: a vane outer wall connected to a radially outer end portion of the vane and coupled to a downstream end portion of the impeller housing; and a vane inner wall connected to a radially inner end portion of the vane and arranged downstream of the impeller.

### Advantageous Effects of Invention

According to embodiments of the disclosure, the following effects can be obtained.

First, an impeller is mounted on one end of a rotational shaft. A reverse fan motor in which the impeller is arranged downward of a motor in an airflow direction can be constituted, thereby improving the cooling performance of the motor.

On the other hand, Patent Document 3 includes a forward fan located upstream of a motor in the airflow direction and a reverse fan located downstream of the motor.

Due to this, Patent Document 3 has a problem in that the cooling performance of the motor is lowered compared to the reverse fan motor because air temperature rises while passing through the forward fan.

Second, the impeller may be arranged outside two bearings. In case that the impeller is arranged adjacent to any one of the two bearings, an outward preloading method may be employed in which preload is applied to bearings in a direction of outer rings of the two bearings moving away from each other toward outsides of inner rings of the two bearings. Accordingly, even in case that the impeller generates the moment during operation, the bearings can provide stable support against the moment.

On the other hand, Patent Document 1 discloses an inward manner in which the outer rings of two bearings are arranged inside the inner rings of the two bearings by applying preload to an outer ring of a first bearing, which is arranged on an upstream side in the airflow direction, of the two bearings.

As the impeller rotates, a moment acts on the center of gravity of the impeller. The moment of the impeller varies in magnitude depending on an axial distance from the outer ring of the bearing. For example, the magnitude of the moment increases as the axial distance between the center of gravity of the impeller and the outer ring of the second bearing close to the impeller increases.

In another example, the magnitude of the moment decreases as the axial distance between the center of gravity of the impeller and the outer ring of the second bearing decreases.

In the inward preloading method of Patent Document 1, an axial distance d1 between the outer ring of the second bearing and the center of gravity of the impeller is larger than an axial distance d2 between the inner ring and the center of gravity of the impeller. An axial distance d1 between the outer ring of the second bearing and the center of gravity of the impeller in the inward preloading method of Patent Document 1 is larger than an axial distance d1 between the outer ring of the second bearing and the center of gravity of the impeller according to the disclosure.

Due to this, the inward preloading method of Patent Document 1, compared to the disclosure (outward preloading method), is difficult to stably support the bearing and shortens the lifespan of the bearing due to the increase in moment which is generated by the impeller based on the positions of the impeller and the bearing.

Third, a stopper arranged inside a motor housing surrounds at least a portion of one surface of the outer ring of the second bearing facing the motor. Accordingly, the stopper can restrict the movement of the second bearing, which is a load bearing located adjacent to the impeller, of the two bearings, in the thrust direction. Therefore, the second bearing adjacent to the impeller can resist the thrust of the impeller, even when the thrust is generated in the impeller during operation, thereby improving the support performance of the bearing.

On the other hand, Patent Document 1 differs from the disclosure in that there is no structure of restricting the second bearing from moving in the thrust direction although the thrust is applied to the second bearing arranged adjacent to the impeller during high-speed operation (the same applies to Patent Document 2).

Due to this, in Patent Documents 1 and 2, when the thrust is applied to the bearing during operation, there is a problem in that a gap between the balls and the raceway of the bearing widens, causing vibration and noise of the bearing.

In patent document 3, the load bearing is arranged adjacent to the forward fan. The semi-load bearing which receives preload is arranged adjacent to the reverse fan.

However, Patent Document 3 differs from the disclosure in that the load spring is arranged spaced apart from the reverse fan.

Due to this, Patent Document 3 has a problem in that the weight of the impeller causes severe vibration of the rotational shaft during high-speed rotation, further shortening the lifespan of the bearing.

Fourth, the first bearing, which is arranged upstream of the motor, of the two bearings receives preload from the spring and acts as the semi-load bearing. The second bearing, which is arranged downstream of the motor, of the two bearings acts as a load bearing that receives thrust. The second bearing is arranged adjacent to the impeller, which can minimize the moment of the impeller during operation, thereby stably maintaining support strength of the bearing.

On the other hand, in Patent Document 2, the semi-load bearing, which receives the preload, of the two bearings is located adjacent to the impeller.

In the case of Patent Document 2, the load bearing which receives both preload and thrust are applied is located far from the impeller.

However, in the case of Patent Document 2, the vibration of the rotational shaft may become more severe due to the increased distance between the load bearing and the impeller during high-speed rotation, thereby further shortening the lifespan of the bearing.

Fifth, a holder has a spring mounted inside thereof to act as a medium for transmitting the preload of the spring, and a spring inner wall of the holder is coupled to an outer circumferential surface of the outer ring of the first bearing. An O-ring may be mounted on a spring outer wall of the holder, to allow the holder to move in the thrust direction on an inner circumferential surface of a first bearing housing. Therefore, the spring and the holder can move in the thrust direction when the thrust is generated in the impeller during operation, to suppress a gap generation between the balls and the raceway of the bearing in advance. In addition, vibration and noise of the bearing can be reduced, and the lifespan of the bearing can extend.

On the other hand, the spring of Patent Document 1 applies the preload by directly contacting the outer ring of the first bearing, while the spring according to an embodiment of the disclosure is different from the spring of Patent Document 1 in that it applies the preload to the bearing indirectly through the holder (the preloading device of Patent Document 2 also directly contacts the bearing).

Patent Document 1 differs from the disclosure in that the outer rings of the two bearings are bonded to a fan motor housing, such that the axial positions of the two bearings are fixed (so-called displacement preload).

During actual operation of the fan motor, a temperature difference occurs between the rotational shaft and the bearing housing. The preload amount may vary due to internal wear of the bearing, and the like.

As the magnitude of the initially designed preload changes, the critical speeds of rotating elements (the rotational shaft, the bearing, the rotor, and the like) decrease. This shortens the lifespan of the rotational shaft or bearing. Patent Document 3 differs from the disclosure in that the outer rings of the two bearings are bonded to an inner circumferential surface of a support pipe, such that axial positions of the two bearings are fixed (so-called displacement preload).

Due to this, Patent Document 3 has the same problem as the above-described Patent Document 1.

### Brief Description of Drawings

FIG. 1 is a perspective view of appearance of a fan motor according to the disclosure.
FIG. 2 is an exploded view of components of the fan motor of FIG. 1.
FIG. 3 is a cross-sectional view taken along line III-III in FIG. 1, which is a conceptual view for explaining the structure of a reverse fan motor.
FIG. 4 is a conceptual view of a structure of a motor housing in FIG. 1. FIG. 4A shows the motor housing viewed from top. FIG. 4B shows the motor housing viewed from bottom.
FIG. 5 is an enlarged conceptual view of an area V in FIG. 3 for explaining a preloading structure of a bearing.
FIG. 6 is an enlarged conceptual view of an area VI in FIG. 5, showing that a first bearing and a holder are movable axially by an O-ring along an inner circumferential surface of a first bearing housing.
FIG. 7 is a perspective view of a structure of the holder in FIG. 6.
FIG. 8 is a conceptual view of a state that a spring is mounted inside the holder in FIG. 7.
FIG. 9 is a conceptual view for explaining an outward preloading method of the bearing in FIG. 3.
FIG. 10 is a conceptual view for explaining the effect when thrust is applied during operation of a fan motor according to the disclosure.
FIG. 10A is a conceptual view for explaining the operation of a preloading device of a bearing while a fan motor according to the disclosure is stopped. FIG. 10B is a conceptual view for explaining the operation and effect of a preloading device when thrust is applied during operation of a fan motor according to the disclosure.
FIG. 11 is a conceptual view for comparing the effects of inward preloading and outward preloading methods of a bearing in a reverse fan motor. FIG. 11A shows the inward preloading method of the bearing. FIG. 11B shows the outward preloading method of the bearing.
FIG. 12 is a conceptual view for explaining that a first bearing, a rotor, a second bearing, and an impeller are sequentially coupled inside a motor housing, an impeller housing, and a vane housing in FIG. 3.
FIG. 13 is a conceptual view of a reverse fan motor structure according to another embodiment of the disclosure.
FIG. 14 is a conceptual view for comparing the inward preloading method and the outward preloading method according to the arrangement relationship between an impeller and two bearings. FIG. 14A shows the inward preloading method. FIG. 14B shows the outward preloading method.
FIG. 15 is a conceptual view of a fan motor according to still another embodiment of the disclosure.

### Mode for the Invention

Hereinafter, a fan motor according to an embodiment of the present disclosure will be described in detail with reference to the accompanying drawings.

In the following description, in order to clarify the characteristics of the present disclosure, descriptions of some components may be omitted.

### 1. Definition of Terms

It will be understood that although the terms first, second, etc. may be used herein to describe various elements, these elements should not be limited by these terms. These terms are generally only used to distinguish one element from another.

It will be understood that when an element is referred to as being "connected with" another element, the element may be connected with the another element or intervening elements may also be present. In contrast, when an element is referred to as being "directly connected with" another element, there are no intervening elements present.

The singular forms are intended to include the plural forms as well, unless the context clearly indicates otherwise.

A "fan motor" used in the following description may be understood as a concept meaning a device that suctions or blows air by rotating a fan using a power source such as an electric motor.

The term "radial" as used in the following description means a shape that extends like the spokes of a wheel in all directions from a central point.

The term "thrust" used in the following description means a force applied by a fluid such as air to an impeller in a direction opposite to an axial direction when the impeller suctions the fluid in the axial direction, namely, a force acting on the impeller or a rotational shaft on which the impeller is mounted.

The term "axial direction" used in the following description means a longitudinal direction of the rotational shaft.

The term "radial direction" used in the following description means a longitudinal direction of a line segment from a center of a circle or cylinder to a point on a circumference of a circle.

The term "axial direction" used in the following description means a direction of a circumference of a circle.

Bearing preloading methods used in the following description may be divided into an inward preloading method and an outward preloading method.

Inward preloading is a method of applying preload to one of two bearings so that outer rings of the two bearings come closer to each other in an axial direction with respect to inner rings of the two bearings. That is, inward preloading is named as such because preload is applied to one of two bearings so that the outer rings of the two bearings move toward the inside of the inner rings of the two bearings.

Outward preloading is a method of applying preload to a bearing so that outer rings of two bearings are spaced apart from each other in an axial direction with respect to inner rings of the two bearings. That is, inward preloading is named as such because preload is applied to one of two bearings so that the outer rings of the two bearings move toward the outside of the inner rings of the two bearings.

### 2. Description of configuration of fan motor according to one embodiment

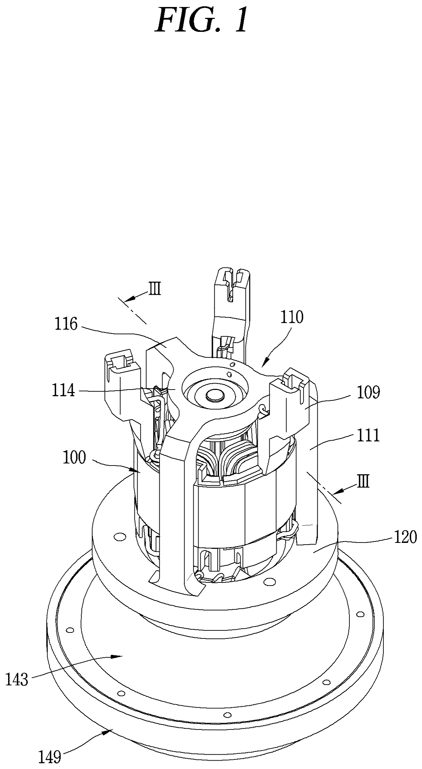

FIG. 1 is a perspective view of appearance of a fan motor according to the disclosure.

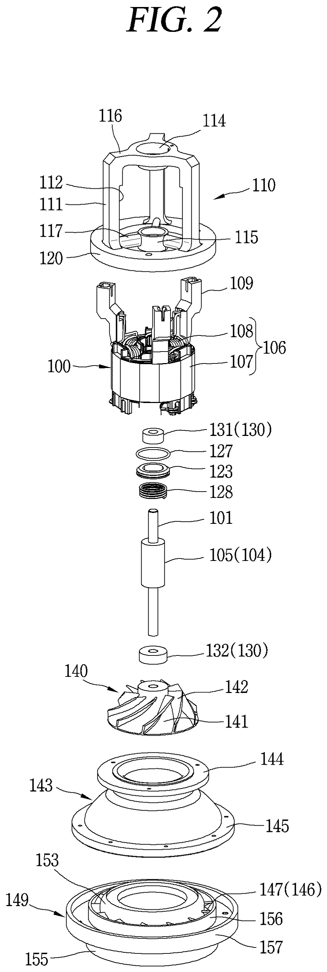

FIG. 2 is an exploded view of components of the fan motor of FIG. 1.

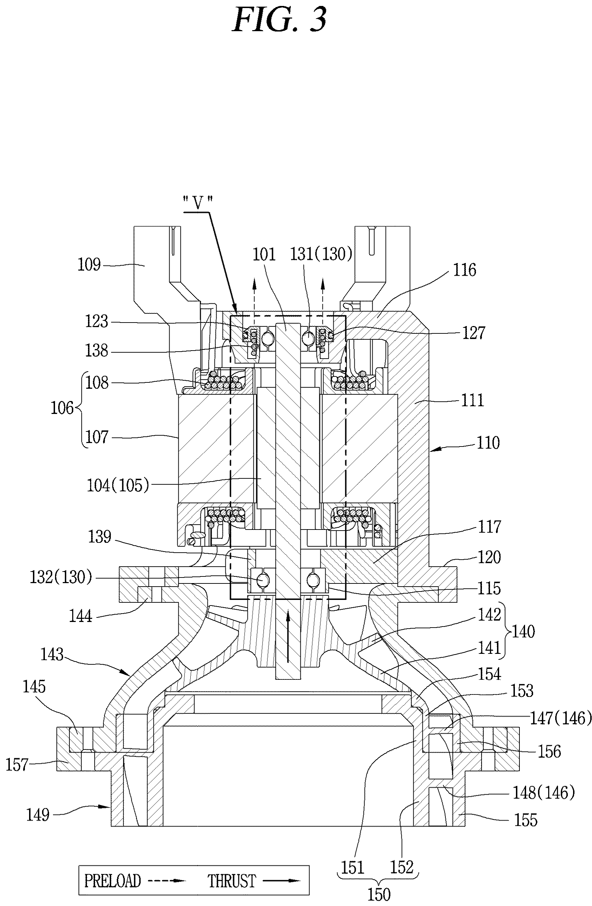

FIG. 3 is a cross-sectional view taken along line III-III in FIG. 1, which is a conceptual view for explaining the structure of a reverse fan motor.

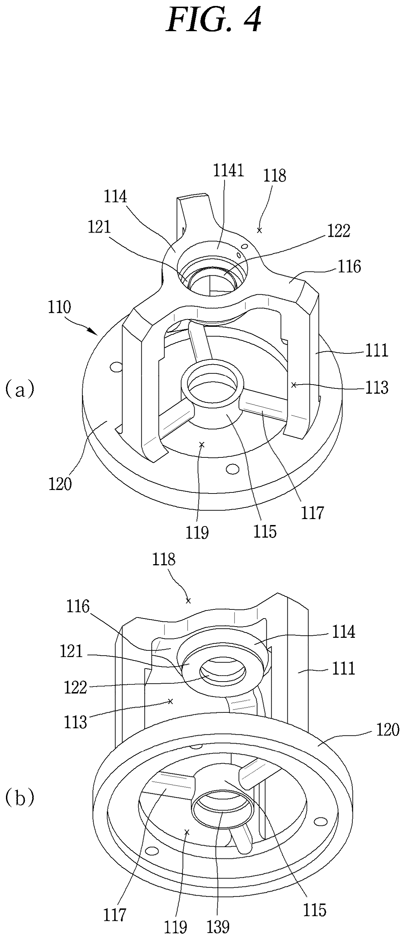

FIG. 4 is a conceptual view of a structure of a motor housing 110 in FIG. 1. FIG. 4A shows the motor housing 110 viewed from top. FIG. 4B shows the motor housing 110 viewed from bottom.

A fan motor according to the disclosure may be applied to home appliances, such as a handy-stick cleaner and the like.

Fan motors may be classified into forward fan motors and reverse fan motors depending on the relative positions of an impeller 140 and a motor 100. In this embodiment, the fan motor is implemented as a reverse fan motor.

The fan motor according to the disclosure includes a motor housing 110 and a motor 100. The motor housing 110 may define appearance of the fan motor. The motor housing 110 is configured to accommodate the motor 100.

The motor 100 may include a rotational shaft 101, a rotor 104, and a stator 106.

The rotation shaft 101 is arranged at the center of the motor housing 110 and an impeller housing 143 to be described later. The rotational shaft 101 extends along a center line which passes through the centers of the motor housing 110 and the impeller housing 143 in the axial direction.

A plurality of bearings 130 rotatably support both end portions of the rotational shaft 101. The plurality of bearings 130 may include a first bearing 131 and a second bearing 132.

A first bearing support portion 102 is formed on an upstream side of the rotational shaft 101. The first bearing 131 is press-fitted to the first bearing support portion 102. The first bearing 131 may be configured as a ball bearing to be explained later. The first bearing 131 may be arranged upstream of the rotor 104.

A second bearing support portion 103 is formed on a downstream side of the rotational shaft 101. The second bearing 132 is press-fitted to the second bearing support portion 103. The second bearing 132 may be configured as a ball bearing to be explained later. The second bearing 132 may be arranged downstream of the rotor 104.

A rotor support portion is formed on a central portion of the rotational shaft 101. The rotor support portion is arranged between the first bearing support portion 102 and the second bearing support portion 103. The rotor 104 is press-fitted to the rotor support portion.

The rotor 104 includes a permanent magnet 105. The rotor 104 may optionally include a rotor core. The permanent magnet 105 may be coupled to the rotational shaft 101 or to the rotor core. In this embodiment, the rotor core is omitted to miniaturize the motor 100, and the permanent magnet 105 is shown coupled to the rotor support portion.

A stator 106 is configured to surround the rotor 104. The stator 106 may be configured to surround the permanent magnet 105.

The stator 106 includes a stator core 107 and a stator coil 108. The stator core 107 includes a back yoke, a plurality of teeth, and a plurality of slots. The back yoke may be formed in a cylindrical shape. The back yoke may form an outer circumference of the stator core 107.

The plurality of teeth may protrude radially inward from the inner circumferential surface of the back yoke toward the rotational shaft 101. The plurality of teeth are spaced apart from one another in the circumferential direction along the inner circumferential surface of the back yoke. Each slot is formed between two teeth adjacent to each other in a circumferential direction.

The slot is formed through the stator core 107 in the axial direction. The plurality of teeth and the plurality of slots are alternately arranged in the circumferential direction.

The stator coil 108 may be arranged as a plurality of three-phase coils. The stator coil 108 is wound on the tooth. An insulator is arranged for electrical insulation between the stator coil 108 and the stator core 107.

The plurality of slots may form internal flow paths for cooling the motor 100. Air may flow through the internal flow paths to cool the motor 100.

A lead wire 109 that applies power to one side of the stator coil 108 may extend in the axial direction. The lead wire 109 may be connected to an external power connection portion 126 to receive external power.

With the configuration, when power, such as alternating current AC, is applied to the stator coil 108, a magnetic field is generated around the stator coil 108. The rotor 104 rotates relative to the stator 106 by electromagnetic interaction between the rotor 104 and the stator 106. The permanent magnet 105 and the rotational shaft 101 rotate together to generate rotational force.

The motor housing 110 includes a support 111, a first bearing housing 114, and a second bearing housing 115.

The support 111 extends in the axial direction. The support 111 is formed to support the stator 106 by surrounding a portion of the outer circumferential surface of the stator core 107. The support 111 is arranged as a plurality of supports. The plurality of supports 111 are arranged on an outer circumferential surface of the stator core 107 to be spaced apart from one another in the circumferential direction.

The embodiment illustrates three supports 111. The number of supports 111 may correspond to the number of lead wires 109. The plurality of supports 111 may be arranged in a spaced manner at an interval of 120 degrees in the circumferential direction.

A motor mounting portion 112 may be concavely formed on an inner surface of each support 111. An upstream end portion of the motor mounting portion 112 is radially stepped from an inner surface of the support 111. The step formed on the upstream end portion of the motor mounting portion 112 suppress the stator 106 from moving in the axial direction.

First openings 113 are formed in a radially penetrating manner between adjacent supports 111 of the plurality of supports 111 in the circumferential direction. Each of the first openings 113 is a passage, through which outside and inside of the motor housing 110 communicate with each other, so that external air of the fan motor can flow into the inner flow path of the motor 100. The plurality of first openings 113 and the plurality of supports 111 may be arranged in an alternating manner along the circumferential direction.

The first bearing housing 114 is arranged upstream of the motor 100. The first bearing housing 114 may be formed in a cylindrical shape. The first bearing housing 114 surrounds the first bearing 131. The first bearing housing 114 is formed to accommodate the first bearing 131.

A plurality of first bridges 116 may be arranged between the upstream end portions of the supports 111 and the outer circumferential surface of the first bearing housing 114. The first bridges 116 are configured to connect the upstream end portions of the supports 111 and the outer circumferential surface of the first bearing housing 114. The first bridges 116 extend in the radial direction.

The plurality of first bridges 116 are arranged on the outer circumferential surface of the first bearing housing 114 to be spaced apart from one another at preset intervals in the circumferential direction. Second openings 118 are formed in an axially penetrating manner between adjacent first bridges 116 of the plurality of first bridges 116 in the circumferential direction. Each of the second openings 118 is a passage, through which outside and inside of the motor housing 110 communicate with each other, so that external air of the fan motor can flow into the inner flow path of the motor 100. The plurality of second openings 118 and the plurality of first bridges 116 may be arranged in an alternating manner along the circumferential direction.

An outer end portion of the first bridge 116 in the radial direction may be connected to the upstream end portion of the support 111. An inner end portion of the first bridge 116 in the radial direction may be connected to an outer circumferential surface of the first bearing housing 114. Accordingly, the support 111 can be connected to the first bearing housing 114 through the corresponding first bridge 116, and thus can support the first bearing housing 114.

An outer ring part 120 may be arranged on a downstream end portion of the support 111. The outer ring part 120 extends in the circumferential direction along an outer circumference of the downstream side of the stator 106. Accordingly, the outer ring part 120 can connect the downstream end portions of the plurality of supports 111.

The second bearing housing 115 is concentrically arranged in a central portion of the outer ring part 120. The first bearing housing 114 and the second bearing housing 115 are spaced apart from each other in the axial direction. The first bearing housing 114 and the second bearing housing 115 are arranged concentrically with each other inside the motor housing 110.

The second bearing housing 115 is formed in a cylindrical shape. The second bearing housing 115 accommodates the second bearing 132.

The second bearing housing 115 is arranged downstream of the motor 100. The second housing 132 is arranged downstream of the motor 100.

A plurality of second bridges 117 may be arranged between the downstream end portions of the supports 111 and the outer circumferential surface of the second bearing housing 115. The second bridges 117 are configured to connect the downstream end portions of the supports 111 and the outer circumferential surface of the second bearing housing 115. The second bridges 117 extend in the radial direction.

The plurality of second bridges 117 are arranged on the outer circumferential surface of the second bearing housing 115 to be spaced apart from one another at preset intervals in the circumferential direction. Third openings 119 are formed in an axially penetrating manner between adjacent second bridges 117 of the plurality of second bridges 117 in the circumferential direction.

Each of the third openings 119 is a passage, through which outside and inside of the motor housing 110 communicate with each other, so that external air of the fan motor can flow into the inner flow path of the motor 100. The plurality of third openings 119 and the plurality of second bridges 117 may be arranged in an alternating manner along the circumferential direction.

A part of an outer end portion of the second bridge 117 in the radial direction may be connected to the downstream end portion of the support 111. Another part of the outer end portion of the second bridge 117 in the radial direction may be connected to the inner circumferential surface of the outer ring part 120.

An inner end portion of the second bridge 117 in the radial direction may be connected to an outer circumferential surface of the second bearing housing 115. Accordingly, the support 111 and the outer ring part 120 can be connected to the second bearing housing 115 through the corresponding second bridge 117, and thus can support the second bearing housing 115.

An impeller 140 is arranged downstream of the motor 100. The impeller 140 may be arranged downstream of the second bearing 132.

The impeller 140 includes a hub 141 and a plurality of blades 142. The impeller 140 may be configured as a type of axial flow fan.

The hub 141 is inclined so that its diameter increases along the axial direction. The diameter of the hub 141 gradually increases from an upstream end portion to a downstream end portion of the hub 141 based on an air flow direction. The upstream end portion of the hub 141 is positioned toward the motor 100.

An impeller 140 support portion 111 is formed on a downstream end portion of the rotational shaft 101. The second bearing support portion 103 may be arranged between the rotor support portion and the impeller 140 support portion 111.

A shaft coupling hole is formed through a central portion of the hub 141 in the axial direction. Accordingly, the impeller 140 support portion 111 of the rotational shaft 101 can be press-fitted to the central portion of the hub 141.

Each of the plurality of blades 142 may spirally extend along the axial direction of the hub 141. One end portion of the corresponding blade 142 may protrude from the upstream end portion of the hub 141 in the radial direction. Another end portion of the blade 142 may protrude from the downstream end portion of the hub 141 toward the upstream side of the hub 141.

The plurality of blades 142 are spaced apart from one another at preset intervals along the circumferential direction of the hub 141.

With the configuration, the impeller 140 can rotate together with the rotational shaft 101. The plurality of blades 142 may rotate at high speed together with the hub 141 and can suck in air, which has passed through the motor 100, by guiding the air to flow into the impeller housing 143.

The impeller housing 143 may be arranged on the downstream end portion of the motor housing 110. The impeller housing 143 and the motor housing 110 are coupled to each other. An upstream end portion of the impeller housing 143 and the downstream end portion of the motor housing 110 may be coupled in an overlapping manner.

For example, a first fastening part 144 may be formed to protrude radially outward from the upstream end portion of the impeller housing 143. The first fastening part 144 may extend in the circumferential direction along the circumference of the impeller housing 143.

A plurality of first fastening holes may be formed axially through the outer ring part 120. The plurality of first fastening holes may be arranged to be spaced apart from one another along the circumferential direction of the outer ring part 120. A plurality of second fastening holes may be formed through the first fastening part 144 in the axial direction. The first fastening holes and the second fastening holes are arranged to overlap each other in the axial direction. Fastening members, such as screws, may pass through the first fastening holes and the second fastening holes to be fastened to the outer ring part 120 and the first fastening part 144. Accordingly, the outer ring part of the motor housing 110 and the first fastening part 144 of the impeller housing 143 can be fastened by the fastening members.

The impeller housing 143 may be formed in a conical shape. The impeller housing 143 defines the appearance of the fan motor together with the motor housing 110.

The impeller housing 143 may have a shape corresponding to the shape of the hub 141 of the impeller 140. However, the diameter of the impeller housing 143 is larger than the diameter of the impeller 140, so that a first flow path part is formed between the impeller housing 143 and the impeller 140.

The impeller housing 143 has an accommodation space in which the impeller 140 is accommodated. A suction port is formed at the upstream end portion of the impeller housing 143. The suction port is connected in communication with the downstream end portion of the motor housing 110.

The impeller housing 143 includes an inclined portion. The inclined portion is formed so that a diameter thereof gradually increases from the upstream end portion of the impeller housing 143 to the downstream end portion of the impeller housing 143.

A vane 146 is arranged downstream of the impeller 146. The vane 146 guides the flow of air generated by the impeller 140. The vane 146 may guide the rotating flow of the impeller 140 in the axial direction. The vane 146 may be implemented as a one-stage vane 146 or a two-stage vane 146. In this embodiment, the vane 146 is shown implemented as a two-stage vane 146.

A vane housing 148 is arranged downstream of the impeller housing 143. An upstream end portion of the vane housing 148 is coupled to the downstream end portion of the impeller housing 143. The downstream end portion of the impeller housing 143 and an upstream end portion of the vane housing 148 may be coupled in an overlapping manner.

For example, a second fastening part 145 may be formed on the downstream end portion of the impeller housing 143. The second fastening part 145 may protrude radially outward from the downstream end portion of the impeller housing 143.

The second fastening part 145 may extend in the circumferential direction along the circumference of the downstream side of the impeller housing 143. A plurality of third fastening holes may be formed through the second fastening part 145 in the axial direction. The plurality of third fastening holes are arranged to be spaced apart in the circumferential direction of the second fastening part 145.

A coupling part 157 may be arranged on the upstream end portion of the vane housing 148. The coupling part 157 may extend along the circumference of the upstream side of the vane housing 148 in the circumferential direction. A plurality of fourth fastening holes may be formed axially through the coupling part 157.

The plurality of fourth fastening holes are arranged to be spaced apart in the circumferential direction of the coupling part 157. The third fastening holes and the fourth fastening holes are arranged to overlap each other in the axial direction. Fastening members, such as screws, are coupled to the second fastening part 145 and the coupling part 157 through the third fastening holes and the fourth fastening holes.

Accordingly, the downstream end portion of the impeller housing 143 and the upstream end portion of the vane housing 148 may be coupled by the fastening members.

The vane housing 148 may include an inner wall part 150, an outer wall part 155, and a vane 146. The inner wall part 150 is arranged inside the vane housing 148. The inner wall part 150 is formed in a cylindrical shape. The inner wall part 150 is arranged on the downstream side of the impeller 140. The inner wall part 150 may be called a vane 146 inner wall part 150 in that it is connected to one side of the vane 146.

The outer wall part 155 is formed in a cylindrical shape. The outer wall part 155 defines the appearance of the vane housing 148. The outer wall part 155 is arranged to be spaced apart radially outward from the inner wall part 150. The outer wall part 155 may be called a vane 146 outer wall part 155 in that it is connected to another side of the vane 146.

The vane 146 protrudes from the outer circumferential surface of the inner wall part 150 to the inner circumferential surface of the outer wall part 155. An inner end portion of the vane 146 in the radial direction is connected to the outer circumferential surface of the inner wall part 150, and an outer end portion of the vane 146 in the radial direction is connected to the inner circumferential surface of the outer wall part 155.

The vane 146 may be formed to be spirally inclined along the outer circumferential surface of the inner wall part 150. The vane 146 may be formed in a curved shape. The vane 146 may be arranged as a plurality of vanes 146. The plurality of vanes 146 are arranged on the outer circumferential surface of the inner wall part 150 to be spaced apart from one another in the circumferential direction. A flow path through which air can flow is formed between the plurality of vanes 146.

The outer wall part 155, the plurality of vanes 146, and the inner wall part 150 may form a second flow path part. The second flow path part may be located downstream of the first flow path part, so that air passed through the first flow path part can be discharged to the outside through the second flow path part.

A protrusion is formed on an upstream end portion of the inner wall part 150 to protrude radially inward. The protrusion extends in the circumferential direction along the circumference of the inner wall part 150.

The two-stage vane 146 may be configured in an axially separated form. The two-stage vane 146 may include a first vane 147 and a second vane 148. The first vane 147 may be arranged upstream of the second vane 148.

The inner wall part 150 may include a first inner wall 151 and a second inner wall 152.

The first inner wall 151 may be formed in a cylindrical shape. The second inner wall 152 may be formed in a cylindrical shape. A thickness of the first inner wall 151 is smaller than a thickness of the second inner wall 152. The first inner wall 151 is arranged upstream of the second inner wall 152. The first inner wall 151 and the second inner wall 152 may be continuous in the axial direction to be integrally connected.

The inner wall part 150 may further include a flow path inner wall 153. The flow path inner wall 153 is formed in a cylindrical shape. The flow path inner wall 153 is formed to surround the outer circumferential surface of the inner wall part 150. An outer circumferential surface of the flow path inner wall 153 and an outer circumferential surface of the second inner wall 152 may define the same circumferential surface.

A bent portion 154 is arranged on an upstream end portion of the flow path inner wall 153. A first coupling groove is formed on an edge of an upstream end portion of the first inner wall 151. The first coupling groove is formed concavely in the circumferential direction along the outer circumferential surface of the first inner wall 151. Accordingly, the bent portion 154 can be coupled to the first coupling groove 154.

The outer wall part 155 may further include a flow path outer wall 156. The flow path outer wall 156 is formed in a cylindrical shape. A second coupling groove may be formed on the downstream end portion of the impeller housing 143. The flow path outer wall 156 may be coupled to the second coupling groove. The downstream end portion of the impeller housing 143 surrounds an outer circumferential surface of the flow path outer wall 156.

The first vane 147 protrudes from the outer circumferential surface of the flow path inner wall 153 to the inner circumferential surface of the flow path outer wall 156. The first vane 147 protrudes in the radial direction. An inner end portion of the first vane 147 in the radial direction is connected to the outer circumferential surface of the flow path inner wall 153. An outer end portion of the first vane 147 in the radial direction is connected to the inner circumferential surface of the flow path outer wall 156.

The first vane 147 is arranged as a plurality of first vanes 156 between the flow path inner wall 153 and the flow path outer wall 156. The plurality of first vanes 147 are arranged on the inner circumferential surface of the flow path inner wall 153 to be spaced apart from one another in the circumferential direction. A flow path through which air can flow is formed between the plurality of first vanes 147.

A second vane 148 protrudes from the outer circumferential surface of the second inner wall 152 to the inner circumferential surface of the outer wall 155. The second vane 148 protrudes in the radial direction. An inner end portion of the second vane 148 in the radial direction is connected to the outer circumferential surface of the second inner wall 152. An outer end portion of the second vane 148 in the radial direction is connected to the inner circumferential surface of the outer wall part 155.

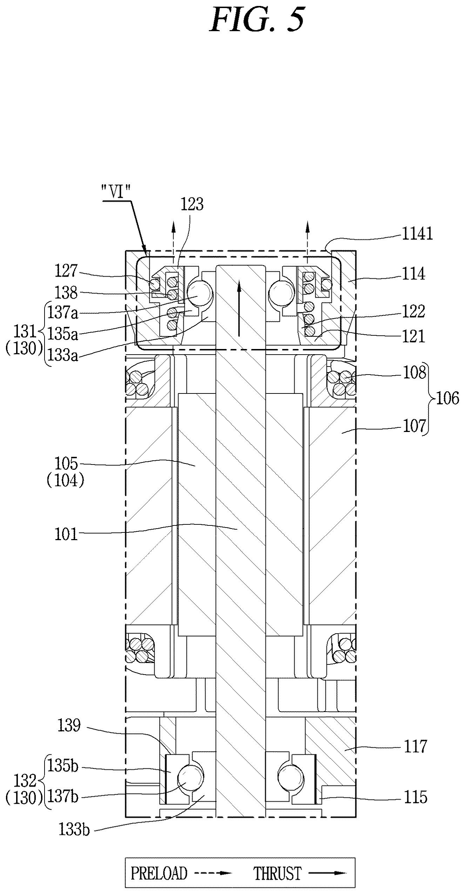

FIG. 5 is an enlarged conceptual view of an area V in FIG. 3 for explaining a preloading structure of a bearing 130.

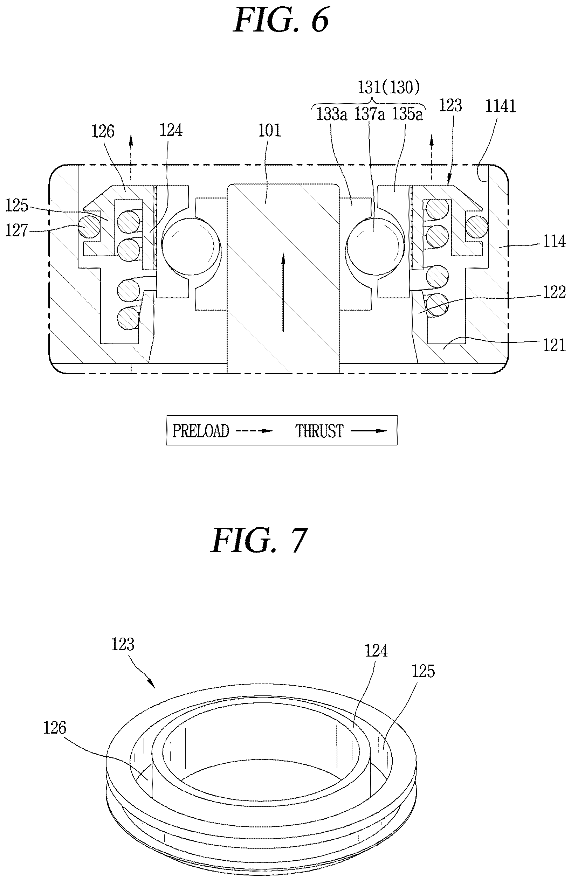

FIG. 6 is an enlarged conceptual view of an area VI in FIG. 5, showing that the first bearing 131 and the holder 123 are movable axially by an O-ring 127 along the inner circumferential surface of the first bearing housing 114.

FIG. 7 is a perspective view of a structure of the holder 123 in FIG. 6.

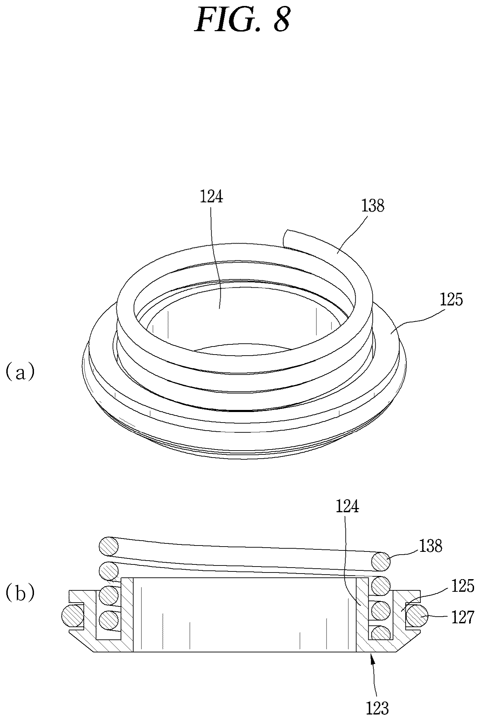

FIG. 8 is a conceptual view of a state that a spring 138 is mounted inside the holder 123 in FIG. 7.

The bearing 130 may be implemented as a ball bearing. The ball bearing may include an inner ring 133a, 133b, an outer ring 135a, 135b, and a ball 137a, 137b.

The inner ring 133a, 133b may be formed in a cylindrical shape. A hollow hole is formed in the inside of the inner ring 133a, 133b so that the rotational shaft 101 passes therethrough. An inner circumferential surface of the inner ring 133a, 133b is press-fitted to the rotational shaft 101. A first ball accommodating groove 134a, 134b is formed on an outer circumferential surface of the inner ring 133a, 133b to be recessed radially inward. The first ball accommodating groove 134a, 134b extends in the circumferential direction along the outer circumference surface of the inner ring 133a, 133b.

The balls 137a, 137b are formed in a spherical shape. A portion of the ball 137a, 137b is partially accommodated in the first ball accommodating groove 134a, 134b and is in rolling contact with the first ball accommodating groove 134a, 134b of the inner ring 133a, 133b. The ball 137a, 137b is arranged as a plurality of balls. The plurality of balls 137a, 137b are arranged at preset intervals in the circumferential direction along the first ball accommodating groove 134a, 134b of the inner ring 133a, 133b.

The outer ring 135a, 135b may be formed in a cylindrical shape. A second ball accommodating groove 136a, 136b is formed on an inner circumferential surface of the outer ring 135a, 135b to be recessed radially outward. The second ball accommodating groove 136a, 136b extends in the circumferential direction along the inner circumference surface of the outer ring 135a, 135b. The outer circumferential surface of the outer ring 135a, 135b may be bonded to the inner circumferential surface of the holder 123 to be described later with an adhesive.

Another portion of the ball 137a, 137b is accommodated in the second ball accommodating groove 136a, 136b and is in rolling contact with the first ball accommodating groove 136a, 136b of the outer ring 135a, 135b. The plurality of balls 137a, 137b are arranged at preset intervals in the circumferential direction along the second ball accommodating groove 136a, 136b of the outer ring 135a, 135b.

A fan motor according to the disclosure includes a bearing preloading device. The bearing preloading device includes a spring 138. The spring 138 may be implemented as a coil spring 138. The spring 138 may extend in a spiral direction. The spring 138 may extend to have a constant diameter in a longitudinal direction. A through hole may be formed inside the spring 138 such that a spring inner wall 124 to be explained later passes therethrough.

The spring 138 may apply preload to the bearing 130 using the holder 123.

The holder 123 may include a spring inner wall 124, a spring outer wall 125, and a connecting portion 126. The spring inner wall 124 is formed in a cylindrical shape. A hollow portion is formed inside the spring inner wall 124 to surround the outer ring 135a of the first bearing 131.

An inner circumferential surface of the spring inner wall 124 may be fixed to the outer circumferential surface of the outer ring 135a of the first bearing 131 with an adhesive. An adhesive layer may be arranged between the inner circumferential surface of the spring inner wall 124 and the outer circumferential surface of the outer ring 135a of the first bearing 131.

An outer circumferential surface of the spring inner wall 124 surrounds the inner circumferential surface of the spring 138.

The spring outer wall 125 is formed in a cylindrical shape. A diameter of the spring outer wall 125 may be larger than a diameter of the spring inner wall 124. The spring outer wall 125 is arranged to be spaced apart radially outward from the outer circumferential surface of the spring inner wall 124.

An accommodation space in which the spring 138 may be accommodated is formed between the spring outer wall 125 and the spring inner wall 124.

An inner circumferential surface of the spring outer wall 125 surrounds an outer circumferential surface of the spring 138. An outer circumferential surface of the spring outer wall 125 is arranged to face the inner circumferential surface of the first bearing housing 114.

The connecting portion 126 is arranged between an upstream end portion of the spring outer wall 125 and an upstream end portion of the spring inner wall 124. The connecting portion 126 protrudes from the upstream end portion of the spring inner wall 124 to the upstream end portion of the spring outer wall 125.

The connecting portion 126 extends in the circumferential direction along the outer circumferential surface of the spring inner wall 124. The connecting portion 126 may connect the upstream end portion of the spring inner wall 124 and the upstream end portion of the spring outer wall 125.

A spring 138 accommodation space between the spring inner wall 124 and the spring outer wall 125 is open toward the rotor 104. The spring 138 accommodation space between the spring inner wall 124 and the spring outer wall 125 is blocked by the connecting portion 126 in an opposite direction to the rotor 104.

A portion of the spring 138 may be accommodated in the spring 138 accommodation space between the spring inner wall 124 and the spring outer wall 125. Another portion of the spring 138 may be accommodated in an inner circumferential surface of a spring support portion 121 of the first bearing housing 114 to be described later.

The upstream end portion of the spring 138 is configured to be in contact with an inner surface of the connecting portion 126. A downstream end portion of the spring 138 is configured to be in contact with the inner surface of the spring support portion 121 of the first bearing housing 114 to be described later. The downstream end portion of the spring 138 is supported on the spring support portion 121.

Accordingly, the upstream end portion of the spring 138 can apply preload to the connecting portion 126 by elastic restoring force, such that the connecting portion 126 can move toward an opposite side to the rotor 104.

The spring outer wall 125 may extend from the connecting portion 126 toward the rotor 104 to be longer than the spring inner wall 124.

An accommodation space in which the first bearing 131 may be accommodated is formed inside the first bearing housing 114. A holder mounting portion 1141 is formed on the inner circumferential surface of the first bearing housing 114 to be recessed radially inward. The holder mounting portion 1141 extends in the circumferential direction along the inner circumferential surface of the first bearing housing 114.

The spring outer wall 125 of the holder 123 may be mounted by being accommodated in the holder mounting portion 1141.

The holder 123 may further include an O-ring 127. The O-ring 127 may be arranged between the outer circumferential surface of the spring outer wall 125 and the inner circumferential surface of the first bearing housing 114. An O-ring mounting groove may be formed on the outer circumferential surface of the spring outer wall 125 to be recessed radially inward.

The O-ring mounting groove extends in the circumferential direction along the outer circumferential surface of the spring outer wall 125 so that the O-ring 127 can be mounted therein. The O-ring mounting groove may have a rectangular cross-sectional shape. The O-ring mounting groove may have a size corresponding to an inner diameter of the O-ring 127 so that the O-ring 127 can be fitted to the O-ring mounting groove.

The O-ring 127 may be formed in a circular ring shape. An outer diameter of the O-ring 127 corresponds to an inner diameter of the holder mounting portion 1141. An outer circumferential surface of the O-ring 127 is in close contact with an inner circumferential surface of the holder mounting portion 1141.

The downstream end portion of the spring outer wall 125 of the holder 123 may be mounted by being hooked onto the downstream end portion of the holder mounting portion 1141.

The O-ring 127 may be made of a rubber material having elasticity. Accordingly, the O-ring 127 can allow the holder 123 to move in a thrust direction in the holder mounting portion 1141. Here, the thrust direction is opposite to the direction of airflow.

The thrust direction is a direction in which the holder 123 moves toward the upstream side of the holder mounting portion 1141. Based on FIG. 5, the thrust direction denotes the upper side of the first bearing 131.

The O-ring 127 may suppress the holder 123 from slipping in the circumferential direction along the inner circumferential surface of the first bearing housing 114.

The spring support portion 121 is arranged on the inner circumferential surface of the first bearing housing 114. The spring support portion 121 protrudes radially inward from the inner circumferential surface of the first bearing housing 114. The spring support portion 121 is arranged at the downstream end portion on the inner circumferential surface of the first bearing housing 114.

The spring support portion 121 extends in the circumferential direction along the inner circumferential surface of the first bearing housing 114. The spring support portion 121 provides the spring 138 accommodation space which accommodates another portion of the spring 138. The downstream end portion of the spring 138 may be fixedly supported on the inner circumferential surface of the spring support portion 121.

The first bearing housing 114 may further include an alignment guide 122. The alignment guide 122 may be formed in a cylindrical shape. The alignment guide 122 may axially protrude from a radially inner end portion of the spring support portion 121 toward the spring outer wall 125. A shaft through hole is formed through the inside of the alignment guide 122 such that the rotational shaft 101 is inserted therethrough.

The center of the alignment guide 122 may be arranged concentrically with the center of the rotational shaft 101. The alignment guide 122 is formed to surround the outer circumferential surface of the first bearing 131. The alignment guide 122 is arranged downstream of the spring outer wall 125. The alignment guide 122 is arranged to overlap the spring outer wall 125 in the axial direction.

The alignment guide 122 and the inner circumferential surface of the spring outer wall 125 may form the same circumferential surface in the axial direction. Accordingly, the alignment guide 122 can guide the alignment of the first bearing 131. The alignment guide 122 can improve the concentricity of the bearing 130.

A bearing 130 accommodation space in which the second bearing 132 may be accommodated is formed inside the second bearing housing 115. A diameter of the inner circumferential surface of the second bearing housing 115 corresponds to a diameter of the outer circumferential surface of the second bearing 132.

The inner circumferential surface of the second bearing housing 115 and the outer circumferential surface of the second bearing 132 may be bonded by an adhesive. An adhesive layer may be formed between the inner circumferential surface of the second bearing housing 115 and the outer circumferential surface of the second bearing 132.

A stopper 139 is arranged on the inner circumferential surface of the second bearing housing 115. The stopper 139 protrudes radially inward from the inner circumferential surface of the second bearing housing 115. The stopper 139 extends in the circumferential direction along the inner circumferential surface of the second bearing housing 115.

The stopper 139 is arranged to face one surface of the upstream end portion of the outer ring 135b of the second bearing 132. The stopper 139 is arranged to surround at least a portion of one axial surface of the outer ring 135b of the second bearing 132 facing the rotor 104. The stopper 139 and the one axial surface of the outer ring 135b of the second bearing 132 may be arranged in close contact with each other.

Accordingly, the stopper 139 can restrict the second bearing 132 from moving in the thrust direction.

Hereinafter, the operation and effects according to the configuration of the disclosure will be described.

According to the configuration of the disclosure described above, the impeller 140 can rotate at high speed by receiving power from the motor 100 through the rotational shaft 101. By the rotation of the impeller 140, external air of the motor housing 110 is sucked into the inner flow paths of the motor housing 110 through the openings of the motor housing 110.

The first openings 113 of the motor housing 110 are formed to penetrate axially between the plurality of first bridges 116 arranged upstream of the motor housing 110. The second openings 118 of the motor housing 110 are formed to penetrate radially between the plurality of supports 111 which support the outer circumferential surface of the stator 106 accommodated inside the motor housing 110. The external air of the motor housing 110 can be sucked into the motor housing 110 through at least one of the plurality of first openings 113 and the plurality of second openings 118.

The air sucked into the motor housing 110 can cool the motor 100 by being brought into contact with the stator core 107, the stator coil 108, the rotational shaft 101, and the bearing 130 of the motor 100. The air passed through the inner flow paths of the motor 100 moves to the suction port of the impeller housing 143 through the third openings 119 of the motor housing 110. The third openings 119 of the motor housing 110 are formed to penetrate axially between the plurality of second bridges 117 arranged downstream of the motor housing 110.

The air sucked into the suction port of the impeller housing 143 flows in a rotating manner while passing through the first flow path part between the impeller 140 and the impeller housing 143. The air passed through the impeller 140 flows through the second flow path part of the vane housing 148. The air passed through the impeller 140 is guided in the axial direction while passing through the plurality of first vanes 147 and second vanes 148 formed between the flow path inner wall 153 and the flow path outer wall 156.

The air passed through the vane housing 148 is discharged to the outside of the vane housing 148 through outlets of the second vanes 148.

The reverse fan motor is configured such that the motor 100 is arranged upstream of the impeller 140 in the airflow direction. With the configuration, external air of the fan motor first cools the motor 100 while passing through the motor 100, and then is discharged to the outside of the fan motor through the impeller 140.

Therefore, the external air which has relatively low temperature can first cool the motor 100 before being sucked into the impeller 140, thereby improving the cooling performance of the motor 100.

Hereinafter, a bearing preloading method according to the disclosure will be described.

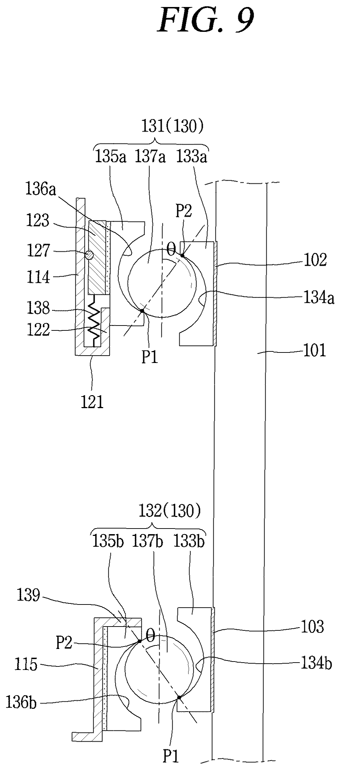

FIG. 9 is a conceptual view for explaining an outward preloading method of the bearing 130 in FIG. 3.

Before operating the fan motor, preload is applied to the bearing 130 during assembly of the fan motor.

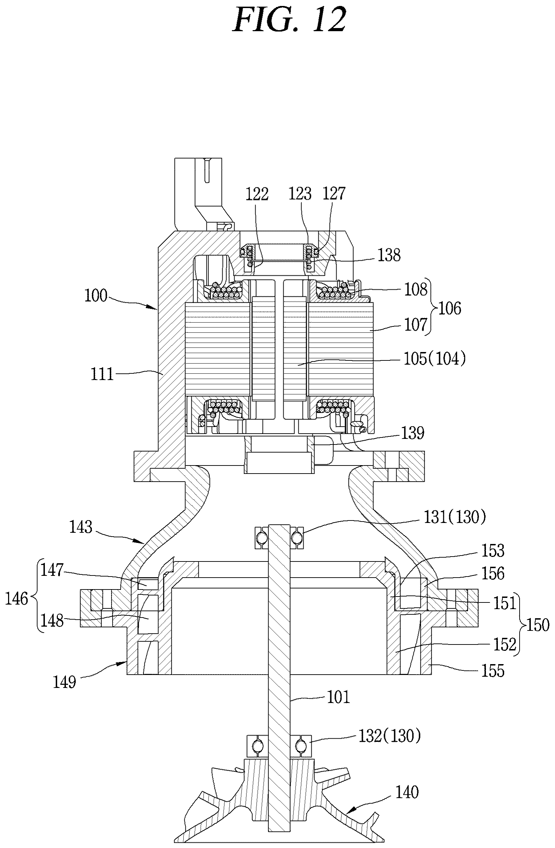

The first bearing 131 is preloaded in the thrust direction. Here, the thrust direction is a direction toward the upper side of the first bearing 131 in FIG. 12. Preload is applied to the outer ring 135a of the first bearing 131.

The spring 138 does not apply preload directly to the first bearing 131, but applies preload to the holder 123. The upstream side of the spring 138 is arranged in the spring 138 accommodation space between the spring inner wall 124 and the spring outer wall 125. The downstream side of the spring 138 is arranged in the spring 138 accommodation space between the inner circumferential surface of the first bearing housing 114 and the alignment guide 122.

The upstream end portion of the spring 138 is in contact with the inner surface of the connecting portion 126 which connects the spring inner wall 124 and the spring outer wall 125. The downstream end portion of the spring 138 is in contact with the spring support portion 121 which connects the downstream end portion of the inner circumferential surface of the first bearing housing 114 and the downstream end portion of the alignment guide 122.

The connecting portion 126 of the holder 123 is pressed toward the motor 100 so that the spring 138 is compressed by a preset amount. The preload of the spring 138 may depend on a compression amount of the spring 138. When the compression amount of the spring 138 increases, the preload of the spring 138 increases. An initial setting value of the preload of the spring 138 may vary depending on the capacity and size of the motor 100.

The elastic restoring force of the spring 138 is applied to the connecting portion 126 of the holder 123 in the thrust direction. The inner circumferential surface of the spring inner wall 124 of the holder 123 and the outer circumferential surface of the first bearing 131 are bonded to each other. In case that the connecting portion 126 of the holder 123 is pulled in the thrust direction by the elastic restoring force of the spring 138, the outer ring 135a of the first bearing 131 is pulled in the thrust direction together with the holder 123. Based on FIG. 9, the thrust direction is from bottom to top of the first bearing 131.

The downstream side of the first ball accommodating groove 134b of the outer ring 135a of the first bearing 131 moves in the thrust direction and is in close contact with one point of the ball 137a, 137b.

The ball 137a is pressed by the movement of the outer ring 135a of the first bearing 131 in the thrust direction. Another point of the ball 137a moves to the upstream side of the first ball accommodating groove 134a of the inner ring 133a of the first bearing 131 and is in close contact with the upstream side of the first ball accommodating groove 134a.

An imaginary straight line connecting a first point P1 where the one point of the ball 137a is in contact with the outer ring 135a of the first bearing 131 and a second point P2 where the other point of the ball 137a is in contact with the inner ring 133a of the first bearing 131 is formed to be inclined at a preset angle θ with respect to the axial direction.

The inner ring 133a of the first bearing 131 moves in the thrust direction along with the upstream movement of the ball 137a. The rotational shaft 101 moves in the thrust direction together with the inner ring 133a of the first bearing 131.

The inner ring 133b of the second bearing 132 moves in the thrust direction together with the rotational shaft 101.

The downstream side of the first ball accommodating groove 134a of the inner ring 133b of the second bearing 132 moves in the thrust direction of the second bearing 132, and is in close contact with one point of the ball 137b of the second bearing 132.

The ball 137b of the second bearing 132 is pressed by the movement of the inner ring 133a of the first bearing 131. Another point of the ball 137b of the second bearing 132 moves to the upstream side of the second ball accommodating groove 136b of the outer ring 135b of the second bearing 132, and is in close contact with the upstream side of the second ball accommodating groove 136b.

An imaginary straight line connecting a first point P1 where the one point of the ball 137b of the second bearing 132 is in contact with the inner ring 133b of the second bearing 132 and a second point P2 where the other point of the ball 137b of the second bearing 132 is in contact with the outer ring 135b of the second bearing 132 is formed to be inclined at a preset angle θ with respect to the axial direction.

According to this configuration, the outer ring 135a of the first bearing 131 moves toward the upstream side of the inner ring 133 with respect to the inner ring 133a of the first bearing 131, and the outer ring 135b of the second bearing 132 moves toward the downstream side of the inner ring 133 with respect to the inner ring 133b of the second bearing 132.

Accordingly, the outer ring 135a of the first bearing 131 and the outer ring 135b of the second bearing 132 can move away from each other along the axial direction. This preloading method of the bearing 130 may be called an outward preloading method in that the outer ring 135 of the bearing 130 is located outside the inner ring 133 of the bearing 130.

Therefore, according to the outward preloading method of the bearing 130, a gap between the raceway and the ball 137b of the bearing 130 can be eliminated, so that the vibration of the bearing 130 can be minimized and the lifespan of the bearing 130 can be extended even during high-speed operation.

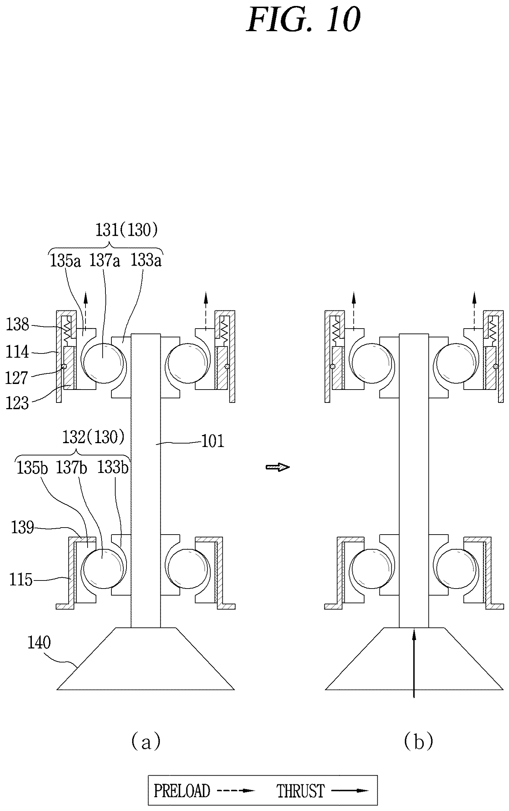

FIG. 10 is a conceptual view for explaining the effect when thrust is applied during operation of a fan motor according to the disclosure.

FIG. 10A is a conceptual view for explaining the operation of the preloading device of the bearing 130 while the fan motor according to the disclosure is stopped. FIG. 10B is a conceptual view for explaining the operation and effect of the preloading device when thrust is applied during operation of the fan motor according to the disclosure.

The impeller 140 does not rotate before the fan motor starts or while the fan motor is stopped, so no thrust is generated.

In this case, the initial setting value of the preload of the bearing 130 can be maintained.

During operation of the fan motor, the rotation of the impeller 140 generates thrust.

The first bearing 131 can move in the thrust direction by being preloaded by the spring 138, and thus is hardly affected by thrust. Therefore, there is no need to restrict the first bearing 131 from moving in the thrust direction. The first bearing 131 may be called a semi-load bearing in that it does not receive a load due to thrust.

Meanwhile, the second bearing 132 is affected by thrust when the thrust is applied during operation. The second bearing 132 may be called a load bearing in that it receives a load due to thrust.

In case that the outer ring 135b of the second bearing 132 is not restricted from moving in the thrust direction, a gap between the ball 137a, 137b and the raceway increases after preload is applied to the bearing 130, which adversely affects the vibration and lifespan of the bearing 130.

Therefore, the outer ring 135b of the second bearing 132 must be restricted from moving in the thrust direction. The stopper 139 according to the disclosure may surround at least a portion of one surface of the second bearing 132 facing the rotor 104, thereby restricting the movement of the outer ring 135b of the second bearing 132 in the thrust direction.

The load bearing (the second bearing 132) according to the disclosure is arranged adjacent to the impeller 140.

In case that the bearing 132 arranged adjacent to the impeller 140 is a semi-load bearing other than a load bearing, the moment generated at the center of gravity of the impeller 140 changes due to the change in axial distance between the outer ring 135 of the semi-load bearing and the center of gravity of the impeller 140 according to the changes in rotational speed and thrust of the impeller 140 during operation. This causes the severe vibration change of the bearing 130 and shortens the lifespan.

It is preferable that the bearing 132 arranged adjacent to the impeller 140 is a load bearing. The outer ring 135 of the load bearing must be restricted from moving in the thrust direction.

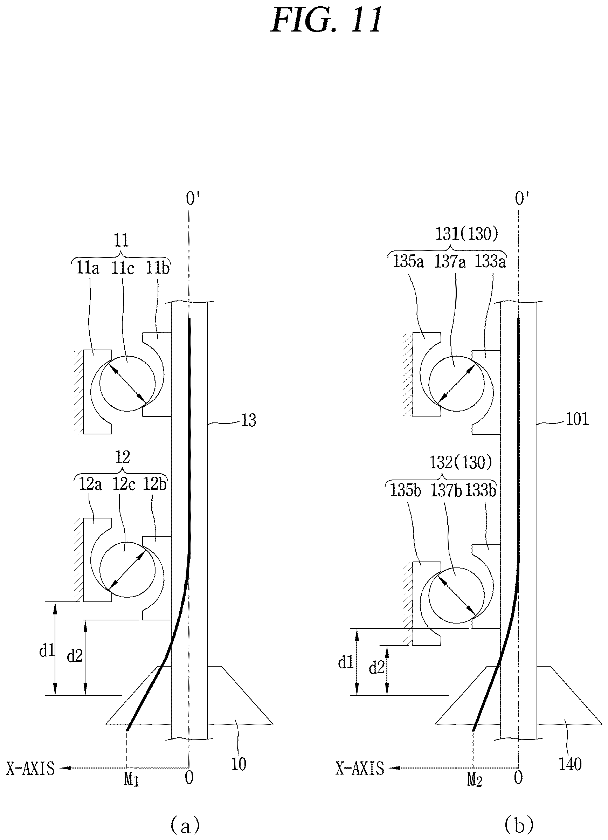

FIG. 11 is a conceptual view for comparing the effects of inward preloading and outward preloading methods of a bearing in a reverse fan motor.

FIG. 11A shows the magnitude of the moment according to the rotation of the impeller 10 is indicated by a thick solid line, in the case that the fan motor is a reverse fan motor and employs an inward preloading method.

FIG. 11B shows the magnitude of the moment according to the rotation of the impeller 140 is indicated by a thick solid line, in the case that the fan motor is a reverse fan motor and employs an outward preloading method.

In FIG. 11, the magnitudes of moments M1 and M2 of the impellers 10 and 140 increase in an X-axis direction (to left) with respect to center lines O-O' of the rotational shafts 13 and 101.

Moment refers to force which tends to rotate around a certain point. When the impellers 10 and 140 rotate, centrifugal forces are generated in the impellers 10 and 140. The centrifugal forces of the impellers 10 and 140 are directed radially outward from the centers of the rotational shafts 101.

The impellers 10 and 140 generate moments that cause the impellers 10 and 140 to rotate around respective bearings 12 close to the corresponding impellers 10 and 140. The magnitudes of the moments M1 and M2 acting on the centers of gravity of the impellers 10 and 140 vary depending on axial distances between the bearings 11, 12, and 130 as the center points and the centers of gravity of the impellers 10 and 140.

Assuming that the rotational speeds and centrifugal forces of the impellers 10 and 140 are constant, the moments M1 and M2 increase when the axial distances between the centers of gravity of the impellers 10 and 140 and the bearings 12 increase. The moments M1 and M2 are each proportional to the magnitude of (force attempting to rotate) X (distance between center point and rotating element). Here, the force attempting to rotate is centrifugal force and assumed to have a constant magnitude. The center point refers to the position of the corresponding bearing 12. The rotating element refers to the corresponding impeller 10, 140.

FIG. 11A, in case that the impeller 10 is located outside of one bearing 12 of the two bearings 11 and 12, according to the inward preloading method, an axial distance d1 between the outer ring of the one bearing 12 (the second bearing 132 of the disclosure) and the center of gravity of the impeller 10 is longer than an axial distance d2 between the inner ring of the one bearing 12 and the center of gravity of the impeller 10.

Due to this, when the impeller 10 is located outside the one bearing 12 of the two bearings 11 and 12, the moment M1 of the impeller 10 attempting to rotate around the outer ring of the one bearing 12 is larger than that in the outward preloading method of the disclosure, which will be described later.

In particular, when the impeller 10 rotates at high speed of 100,000 rpm to 140,000 rpm, the difference of the magnitude of the moment M1 from that in the outward preloading method of the disclosure more increases.

FIG. 11B, in case that the impeller 140 is located outside the second bearing 132 as one of the two bearings 130, according to the outward preloading method, the axial distance d1 between the outer ring 135b of the second bearing 132 and the center of gravity of the impeller 140 is shorter than the axial distance d2 between the inner ring of the second bearing 132 and the center of gravity of the impeller 140.

In this case, when the impeller 140 is positioned outside the one bearing 132 of the two bearings 130 as in the disclosure, the moment M2 of the impeller 140 which attempts to rotate around the outer ring 135b of the one bearing 132 is smaller than that in the inward preloading method. The difference between the moments M1 and M2 more increase during the high-speed rotation of the impeller 140.

Accordingly, the impeller 140 according to one embodiment of the disclosure is positioned outside the second bearing 132 of the two bearings 130, and the spring 138 applies preload to the first bearing 131 in the outward preloading manner. This can reduce the moment M2 of the impeller 140, thereby stably supporting the bearing 130 and improving support performance.

FIG. 12 is a conceptual view for explaining that the first bearing 131, the rotor 104, the second bearing 132, and the impeller 140 are sequentially coupled in the motor housing 110, the impeller housing 143, and the vane housing 148 in FIG. 3.

The motor 100 is accommodated and supported inside the motor housing 110. The holder 123 is mounted inside the first bearing housing 114 located upstream of the motor housing 110. The spring 138 is mounted in the spring 138 accommodating space formed inside the spring inner wall 124, the spring outer wall 125, and the connecting portion 126 of the holder 123.

The rotor 104 is press-fitted to the center portion of the rotational shaft 101. In the airflow direction, the first bearing 131 is arranged upstream of the rotor 104. The first bearing 131 is press-fitted to the upstream end portion of the rotational shaft 101.

The second bearing 132 is arranged downstream of the rotor 104. The second bearing 132 is press-fitted to the downstream side of the rotational shaft 101.

The impeller 140 is arranged downstream of the rotor 104. The impeller 140 may be arranged downstream of the second bearing 132. The impeller 140 is press-fitted to the downstream end portion of the rotational shaft 101.

A rotor 104 assembly which includes the first bearing 131, the rotor 104, the second bearing 132, and the impeller 140 may be sequentially coupled to the rotational shaft 101 in a direction from the upstream side to the downstream side in the airflow direction.

The first bearing 131, the rotor 104, the second bearing 132, and the impeller 140 are coupled by being accommodated inside the holder 123 of the first bearing housing 114 of the motor housing 110, the rotor 104 accommodating portion of the stator core 107, the second bearing housing 115, and the impeller housing 143, respectively.

The diameter of the first bearing 131 and the diameter of the outer circumferential surface of the outer ring 135 are preferably smaller than the inner diameter of the rotor 104 accommodating portion of the stator core 107. This facilitates the assembly of the bearing 130 and the bearing 130 housing.

In case that the diameter of the first bearing 131 is larger than or equal to the inner diameter of the rotor 104 accommodating portion, the first bearing 131 must be first assembled to the first bearing housing 114 before the motor 100 is assembled to the supports 111 of the motor housing 110.

For example, the motor 100 is assembled after the first bearing 131 is assembled. In this case, the first bearing 131 must be press-fitted to the upstream end portion of the rotational shaft 101 after being assembled to the first bearing housing 114.

Due to this, the first bearing 131 is difficult to be press-fitted to the rotational shaft 101.

Therefore, it is preferable that the diameter of the second bearing 132 be larger than the diameter of the first bearing 131.

With the configuration, the diameter of the second bearing 132 can be made larger than the diameter of the first bearing 131, thereby increasing the support strength of the bearing 130.

The increase in strength of the second bearing 132 is effective in improving stress, which is a force that resists the moment of the impeller 140, because the impeller 140 is arranged outside the second bearing 132 of the two bearings 130 and generates a rotational moment during operation.

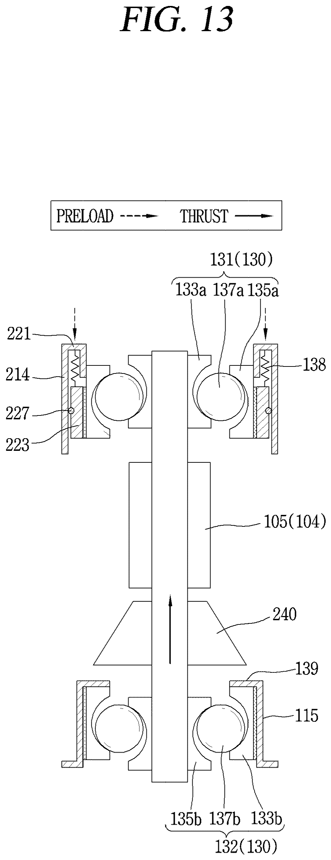

FIG. 13 is a conceptual view of a reverse fan motor structure according to another embodiment of the disclosure.

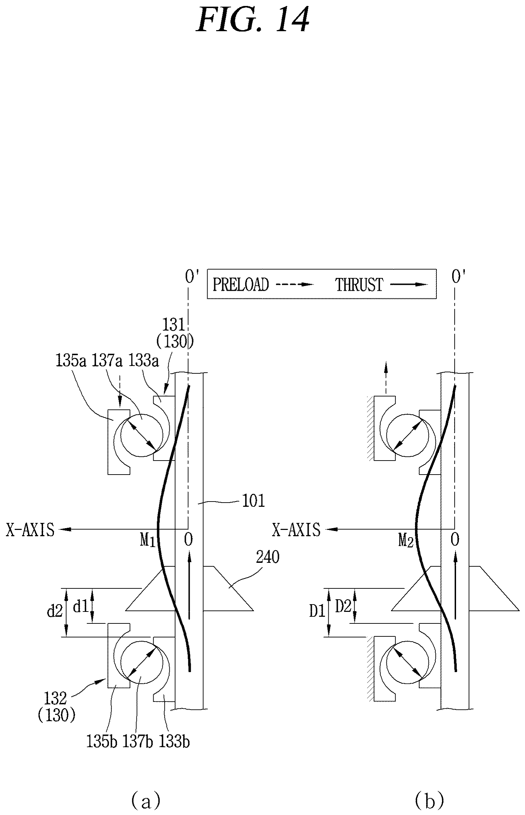

FIG. 14 is a conceptual view for comparing the inward preloading method and the outward preloading method according to the arrangement relationship between an impeller 240 and two bearings 130. FIG. 14A shows the inward preloading method. FIG. 14B shows the outward preloading method.

This embodiment differs from the embodiment of FIGS. 1 to 12 described above in that the impeller 240 is arranged between the two bearings 130 and applies preload to the bearings 130 in an inward preloading manner.

Other components are the same as or similar to those in the embodiment of FIGS. 1 to 12, so a redundant description will be omitted.

Hereinafter, the differences from the embodiment of FIGS. 1 to 12 described above will be mainly explained.

A bearing 130 preloading method according to an embodiment is an inward preloading method. As described above, the inward preloading method means a method of applying preload to the bearings 130 so that the outer rings 135 of the two bearings 130 move in a direction close to each other so as to be located inside the inner rings 133 of the two bearings 130.

The spring 138 located between the spring inner wall 224 and the spring outer wall 225 of the holder 223 is configured to apply preload so that the outer ring 135a of the first bearing 131 protrudes toward the motor 100 with respect to the inner ring 133a of the first bearing 131.

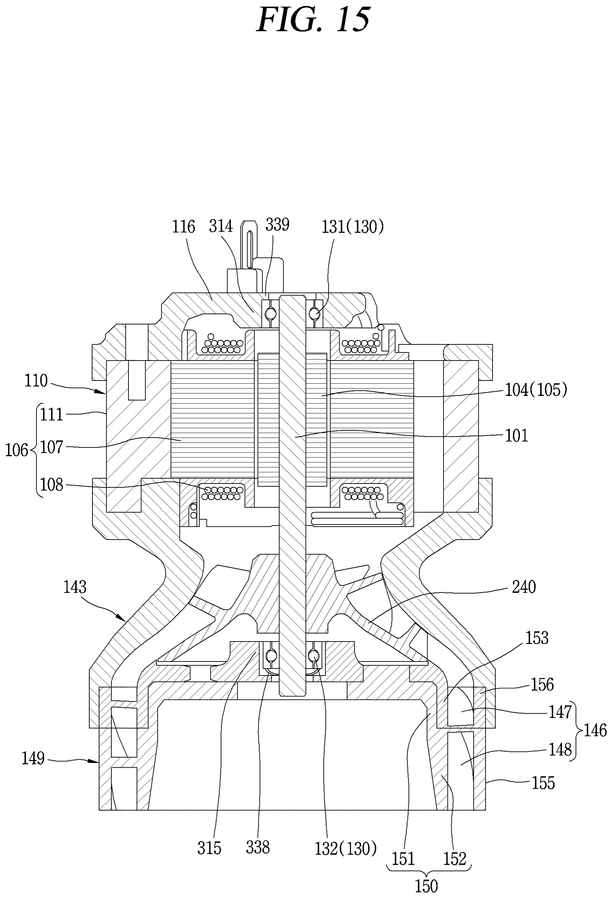

For this purpose, a spring support portion 221 protruding radially from the inner circumferential surface of the first bearing housing 214 is located on the upstream end portion of the first bearing housing 214. Here, the upstream end portion of the first bearing housing 214 refers to an upper end of the first bearing housing 214 based on FIG. 15.

The connecting portion 226 connecting the spring inner wall 224 and the spring outer wall 225 of the holder 223 is located on the downstream end portion of the holder 223. Here, the downstream end of the holder 223 means a lower end of the holder 223 based on FIG. 14.

According to this configuration, the elastic restoring force of the spring 138 supported by the spring support portion 221 presses the connecting portion 226 of the holder 223 toward the rotor 104 in the airflow direction.

The outer ring 135a of the first bearing 131 moves relative to the inner ring 133a of the first bearing 131 by the elastic restoring force of the spring 138 to protrude toward the motor 100, and the upstream side of the second ball accommodating groove 136a of the outer ring 135a of the first bearing 131 is in close contact with one point of the ball 137a.

Next, another point of the ball 137a in a diagonal direction moves downward in close contact with the downstream side of the second ball accommodating groove 136a of the inner ring 133a of the first bearing 131, and the inner ring 133b of the second bearing 132 moves toward the motor 100.

Afterwards, the rotational shaft 101 to which the inner ring 133a of the first bearing 131 is press-fitted moves down toward the second bearing 132 in the airflow direction, and the inner ring 133b of the second bearing 132 press-fitted to the rotational shaft 101 moves in the same direction together with the inner ring 133a of the first bearing 131.

The upstream side of the second ball accommodating groove 136b of the inner ring 133b of the second bearing 132 moves down while being in close contact with one point of the ball 137b.

The outer ring 135b of the second bearing 132 is fixed to the inner circumferential surface of the second bearing housing 115.

In this way, preload is applied to the bearing 130. The preloading method according to this embodiment is an inward preloading method.

In this embodiment, the impeller 240 may constitute a reverse fan motor by being arranged downstream of the rotor 104. The impeller 240 and the rotor 104 are arranged between the two bearings 130. The impeller 240 is arranged adjacent to the second bearing 132 of the two bearings 130.

Referring to FIG. 14A, in the case of the inward preloading method according to the embodiment, an axial distance d1 between the center of gravity of the impeller 240 and the outer ring 135b of the second bearing 132 is shorter than an axial distance d2 between the center of gravity of the impeller 240 and the inner ring 133b of the second bearing 132.

Referring to FIG. 14B, in the case of the outward preloading method according to the embodiment, an axial distance D1 between the center of gravity of the impeller 240 and the outer ring 135b of the second bearing 132 is longer than an axial distance D2 between the center of gravity of the impeller 240 and the inner ring 133b of the second bearing 132.

Comparing FIG. 14 A and FIG. 14 B, assuming that the rotational force of the impeller 240 is maintained constant, the axial distance d1 between the center of gravity of the impeller 240 and the outer ring 135 of the second bearing 132 according to the inward preloading method of the embodiment shown in FIG. 14 A is shorter than the axial distance D1 between the center of gravity of the impeller 240 and the outer ring 135 of the second bearing 132 according to the outward preloading method shown in FIG. 14 B.

According to the embodiment, in the case that the impeller 240 is arranged between the two bearings 130 and applies preload to the bearings 130 in the inward preloading manner, the magnitude of the moment M1 generated by the rotation of the impeller 240 during operation is smaller than the magnitude of the moment M2 of the impeller for the bearing to which preload is applied in the outward preloading manner. Therefore, according to the inward preloading method of the bearing according to the embodiment (FIG. 14 A ), the increase in moment can be minimized, thereby extending the lifespan of the bearing 130 while improving the support performance of the bearing 130.

According to the embodiments of FIGS. 1 to 14 described above, even in case that the preload amount of the bearing 130 changes due to a temperature difference between the housing (including the bearing housing) of the fan motor and the bearing 130 and wear of the bearing 130 during operation, the spring 138 according to the disclosure can apply constant preload to the bearing 130.

Even when the preload amount of the bearing 130 varies due to the aforementioned reason during operation, the spring 138 according to the embodiment may apply constant preload to the bearing 130, and thus the preload may be called constant force preload. The constant force preloading method according to the disclosure may be achieved by a holder 223 and an O-ring 227.

The O-ring 227 may be arranged between an inner circumferential surface of a first bearing housing 214 of the holder 223 and a spring outer wall 225, and may allow the holder 223 to move in the thrust direction along the inner circumferential surface of the first bearing housing 214.

The O-ring 227 is made of an elastic material. Therefore, when thrust is generated in the impeller 240, the holder 223 can move in the thrust direction, thereby eliminating a gap between the balls 137a, 137b and the raceway.

FIG. 15 is a conceptual view of a fan motor according to still another embodiment of the disclosure.

This embodiment differs from the embodiment of FIGS. 1 to 12 described above in that the impeller 240 is arranged between the two bearings 130 and applies preload to the bearings 130 in an inward preloading manner. However, this embodiment is the same as or similar to the embodiment of FIG. 13 and FIG. 14A in that the impeller 240 is arranged between the two bearings 130 and applies preload to the bearings 130 in the inward preloading manner.

Other components are the same as or similar to those in the previous embodiments of FIGS. 1 to 14, a description will focus on the differences from the embodiments of FIGS. 1 to 14.

The first bearing 131 arranged upstream based on the airflow direction is arranged upstream of the motor.

When the impeller 240 rotates, thrust is generated in the impeller 240, the rotational shaft 101, and the bearing 130. The first bearing 314 is accommodated in the first bearing housing 131. The outer circumferential surface of the first bearing 131 may be coupled to the inner circumferential surface of the first bearing housing by an O-ring or adhesive. In this embodiment, the outer circumferential surface of the first bearing 131 is shown bonded to the inner circumferential surface of the first bearing housing by an adhesive.

A stopper 339 protrudes radially inward from the upstream end portion of the first bearing housing 314. The upstream end portion of the first bearing 131 is arranged in close contact with an inner surface of the stopper 339.

Accordingly, the stopper 339 can restrict the first bearing 131 from moving in the thrust direction. The first bearing 131 is a load bearing 130 in that it receives a thrust load.

The impeller 240 is arranged downstream of the motor. The impeller 240 is arranged upstream of the second bearing 132. The second bearing 132 is arranged adjacent to the downstream side of the impeller 240.

The second bearing 132 is accommodated inside the second bearing housing 315. The outer circumferential surface of the second bearing 132 may be coupled to the inner circumferential surface of the second bearing housing 315 by an O-ring or adhesive. In this embodiment, the outer circumferential surface of the second bearing 131 is shown bonded to the inner circumferential surface of the second bearing housing 315 by an adhesive.

A bearing preloading device may be accommodated in the inner surface of the second bearing housing 315. The bearing preloading device may be implemented in various forms, such as a spring washer 339 or a spring. The spring washer 339 may be formed in a ring shape.

The spring washer 339 is arranged axially facing the outer ring of the second bearing 132. The spring washer 339 may include a first bent portion and a second bent portion. The first bent portion protrudes convexly toward the outer ring of the second bearing 132.

The second bent portion protrudes convexly in an opposite direction to the first bent portion. The first bent portion and the second bent portion may each have a curved shape having a preset curvature.

When the second bearing 132 is assembled to the inner circumferential surface of the second bearing housing 315, the spring washer 339 may apply preload to the outer ring of the second bearing 132 and thereafter the outer circumferential surface of the second bearing 132 may be fixed to the inner circumferential surface of the second bearing housing 315 by an adhesive or O-ring.

In this embodiment, when the spring washer 339 applies preload to the outer ring of the second bearing 132, the outer ring of the second bearing 132 moves axially toward the impeller 240, and the balls and the raceway of the second bearing 132 are in close contact with each other without a gap while the outer ring of the second bearing 132 further protrudes toward the impeller 240 with respect to the inner ring of the second bearing 132. At this time, the outer ring and inner ring of the second bearing 132 may move together in the axial direction while in close contact with the balls.

The inner ring of the first bearing 131 connected to the second bearing 132 moves to the upstream side of the first bearing 131 by the rotational shaft 101, to be in close contact with the balls of the first bearing 131, and the balls and the raceway of the first bearing 131 may be in close contact with each other without a gap.

The outer rings of the two bearings 130 are positioned inside the inner rings of the two bearings 130 in a direction getting close to each other, and the bearings 130 each receive the preload in the inward preloading manner.

With the configuration, the spring washer 339 can apply the preload to the outer ring of the second bearing 132, thereby eliminating the gap between the balls and the raceway of the bearing 130, thereby extending the lifespan of the bearing 130.

An O-ring may be mounted on the outer circumferential surface of at least one bearing 130 of the first bearing 131 and the second bearing 132. The O-ring may be formed of an elastic rubber material. Accordingly, the O-ring can allow the bearing 130 to move axially on the inner circumferential surface of the bearing housing 314, 315. The O-ring may suppress slippage in the circumferential direction.

When the O-ring is mounted on the outer circumferential surface of the second bearing 132, the O-ring may allow the second bearing 132 to move axially on the inner circumferential surface of the second bearing housing 315, so that even if the preload changes during operation, the spring washer 339 can apply constant preload to the bearing 130.

The embodiments of FIGS. 1 to 14 described above have the holder and the O-ring applied, but in this embodiment, the holder and O-ring are omitted.

Therefore, according to the embodiment, in the structure of the reverse fan motor in which the impeller 240 is arranged between the two bearings 130, the bearings 130 can receive preload in the inward preloading manner. This can minimize the rotational moment of the impeller 240 during operation, as described in FIG. 14A, thereby stably supporting the rotational shaft 101, and improving the support performance of the bearing 130.

The holder 123 according to the embodiments of FIGS. 1 to 12 described above is a structure for applying preload to the bearing 130 in the outward preloading manner, while facilitating the installation of the spring 138.

The holder 223 according to the embodiment of FIG. 13 described above facilitates the installation of the spring 138 to apply the preload to the bearing 130 in the inward preloading manner.

The holder 123, 223 is advantageous in maintaining the rigidity of the bearing 130 because it is not necessary to directly mount the O-ring 127, 227 on the outer circumferential surface of the bearing 130. The holder 123, 223 has a structure of surrounding the bearing 131 and accommodating the inner circumferential surface of the holder 123, 223, which is also advantageous in reducing the diameter of the semi-load bearing 131 which is not affected by thrust load.

## Claims

1. A fan motor comprising:
a rotational shaft;
an impeller rotatably mounted on the rotational shaft and forming an airflow in an axial direction;
a motor arranged upstream of the impeller in a direction of the airflow, and configured to drive the impeller by comprising a rotor coupled to the rotational shaft, and a stator surrounding an outer circumferential surface of the rotor;
a motor housing accommodating the motor;
a plurality of bearings configured to support the rotational shaft, and comprising a first bearing located upstream of the motor, and a second bearing located downstream of the motor;
a spring configured to apply preload to the first bearing; and
a stopper arranged inside the motor housing, surrounding a portion of one surface of the second bearing facing the rotor, and configured to restrict movement of the second bearing in a thrust direction opposite to the direction of the airflow.

2. The fan motor of claim 1, wherein the second bearing is arranged adjacent to the impeller.

3. The fan motor of claim 1, wherein the second bearing is arranged upstream or downstream of the impeller.

4. The fan motor of claim 1, wherein the plurality of bearings are each configured as a ball bearing, and
the ball bearing comprises:
an inner ring coupled to the rotational shaft;
an outer ring arranged radially outside the inner ring; and
balls arranged in rolling contact between the inner ring and the outer ring.

5. The fan motor of claim 4, wherein the spring applies the preload in the thrust direction to the outer ring of the first bearing, and
an axial distance between the outer ring of the first bearing and the outer ring of the second bearing is larger than an axial distance between the inner ring of the first bearing and the inner ring of the second bearing.

6. The fan motor of claim 4, wherein the spring applies the preload in the direction of the airflow to the outer ring of the first bearing, and
an axial distance between the outer ring of the first bearing and the outer ring of the second bearing is smaller than an axial distance between the inner ring of the first bearing and the inner ring of the second bearing.

7. The fan motor of claim 6, wherein the motor and the impeller are located between the first bearing and the second bearing.

8. The fan motor of claim 1, wherein the motor housing comprises:
a first bearing housing arranged upstream of the motor and accommodating the first bearing therein; and
a second bearing housing arranged downstream of the motor, and accommodating the second bearing.

9. The fan motor of claim 8, further comprising a holder arranged inside the first bearing housing and configured to support the spring,
wherein the holder comprises:
a spring inner wall surrounding an inside of the spring, and coupled to an outer circumferential surface of the first bearing;
a spring outer wall surrounding an outside of the spring, and arranged to face an inner circumferential surface of the first bearing housing; and
a connecting portion connecting one end of the spring inner wall and one end of the spring outer wall in an opposite direction to the motor, and
the motor housing further comprises a spring support portion arranged toward the motor, and protruding from the inner circumferential surface of the first bearing housing to support one end of the spring facing the rotor.

10. The fan motor of claim 9, wherein the holder further comprises an O-ring mounted on an outer circumferential surface of the spring outer wall, and configured to be movably in contact with the inner circumferential surface of the first bearing housing in the thrust direction.

11. The fan motor of claim 8, wherein the motor housing further comprises an alignment guide protruding from an inner end of the spring support portion toward the spring inner wall, and arranged to overlap the spring inner wall in the axial direction.

12. The fan motor of claim 8, wherein the motor housing comprises:
a motor support portion extending in the axial direction while surrounding an outer circumferential surface of the motor, and supporting the motor;
a first bridge radially extending from an outer circumferential surface of the first bearing housing toward an upstream end portion of the motor support portion; and
a second bridge radially extending from an outer circumferential surface of the second bearing housing toward a downstream end portion of the motor support portion.

13. The fan motor of claim 12, wherein the motor support portion is arranged as a plurality of motor support portions, arranged spaced apart in a circumferential direction along the outer circumferential surface of the motor, and
the motor housing further comprises an outer ring part extending in the circumferential direction to connect the downstream end portions of the plurality of motor support portions.

14. The fan motor of claim 8, wherein the stopper is arranged toward the motor, and protrudes from an inner circumferential surface of the second bearing housing to secure the one surface of the second bearing.

15. The fan motor of claim 1, wherein a diameter of the second bearing is larger than or equal to a diameter of the first bearing.

16. The fan motor of claim 1, further comprising a vane arranged downstream of the impeller, and configured to guide the airflow.

17. The fan motor of claim 16, further comprising:
an impeller housing coupled to a downstream end portion of the motor housing and accommodating the impeller; and
a vane housing coupled to a downstream end portion of the impeller housing and supporting the vane.

18. The fan motor of claim 17, wherein an upstream end portion of the impeller housing is coupled to an inner circumferential surface of the downstream end portion of the motor housing, and the downstream end portion of the impeller housing is coupled to an inner circumferential surface of an upstream end portion of the vane housing.

19. The fan motor of claim 16, wherein the vane is a one-stage vane or a two-stage vane.

20. The fan motor of claim 16, wherein the vane housing supporting the vane comprises:
a vane outer wall connected to a radially outer end portion of the vane and coupled to a downstream end portion of the impeller housing; and
a vane inner wall connected to a radially inner end portion of the vane and arranged downstream of the impeller.
